# EUROPÄISCHE PATENTANMELDUNG

(11) **EP 1 026 056 A2**
(43) Veröffentlichungstag der Anmeldung: **09.08.2000**
(21) Anmeldenummer: 99122836.2
(22) Anmeldetag: 17.11.1999
(51) Int. Cl.: B60S 1/38

(54) **Wischblatt**

(30) Priorität: 08.02.1999 DE 19904965
(71) Anmelder: ROBERT BOSCH GMBH, 70442 Stuttgart (DE)
(72) Erfinder: Roekens, Jurgen, 1820 Steenokkerseel (BE)

(57) **Zusammenfassung**

Die Erfindung geht aus von einem Wischblatt mit einem Tragbügelsystem (10) zur Reinigung von Windschutzscheiben für Kraftfahrzeuge mit einer Windschaufel (12), die entlang der dem Fahrtwind (14) des Kraftfahrzeugs zugewandten Seite des Tragbügelsystems (10) angeordnet und mit zumindest zwei Befestigungselementen (16, 18) am Tragbügelsystem (10) befestigt ist, wobei ein erstes Befestigungselement (16) eine Rastverbindung herstellt.

Es wird vorgeschlagen, daß das zweite Befestigungselement (18) eine Steckverbindung herstellt, indem es bei der Montage in seitlich ausgelenktem Zustand der Windschaufel (12) mit einem Vorsprung (20) durch eine Öffnung (22) des Tragbügelsystems geführt ist, bevor die Windschaufel (12) mit dem ersten Befestigungselement (16) befestigt ist und die Windschaufel (12) bei und nach der Montage in einzelne Richtungen (30, 32, 50, 54, 66, 68) fixiert.

## Beschreibung

### Stand der Technik

Die Erfindung geht aus von einem Wischblatt nach dem Oberbegriff des Patentanspruchs 1.

Bekannte Scheibenwischer besitzen einen Wischarm, der aus einem auf einer Antriebsachse befestigten Befestigungsteil, einem mit diesem über ein Kniegelenk verbundenes Gelenkteil und aus einer sich an das Gelenkteil starr anschließenden Wischstange aufgebaut ist. Ferner besitzt der Scheibenwischer ein Wischblatt mit einem mehrgliedrigen Tragbügelsystem, das einen Hauptbügel mit daran angelenkten Zwischenbügel aufweist, mit deren Enden Krallenbügel gelenkig verbunden sind. Mit Haltekrallen der Krallenbügel ist ein Wischergummi gehalten. Das Wischblatt ist am Wischarm angelenkt, indem ein hakenförmiges Ende der Wischstange zwischen zwei Seitenwangen des Hauptbügels greift und einen Gelenkbolzen umfaßt. Das so gebildete Gelenk führt das Wischblatt mit dem Wischergummi über eine Kraftfahrzeugscheibe, wobei das Gelenkteil und das Tragbügelsystem es ermöglichen, daß sich der Wischergummi einer Wölbung der Kraftfahrzeugscheibe anpaßt. Ein erforderlicher Anpreßdruck des Wischergummis auf der Kraftfahrzeugscheibe wird mit mindestens einer Zugfeder erreicht, die das Befestigungsteil und das Gelenkteil gemeinsam mit der Wischstange über das Kniegelenk verspannt.

Der Wischergummi besteht aus einem Elastomer. Er hat eine Kopfleiste, die über einen Kippsteg mit einer auf der zu wischenden Scheibe aufliegenden Wischlippe verbunden ist. Durch den Kippsteg kann die Wischlippe im Umkehrpunkt der Wischbewegung in die entgegengesetzte Richtung umklappen, so daß sie stets einen günstigen Winkel zur Windschutzscheibe einnimmt. Wird der Scheibenwischer betätigt, gleitet der Wischergummi mit der Wischlippe über die Kraftfahrzeugscheibe. Während der Fahrt des Kraftfahrzeugs unterströmt ein Fahrtwind den Wischarm und das Wischblatt und erzeugt eine Kraft entgegen der Anpreßkraft der Zugfeder. Insbesondere bei hohen Geschwindigkeiten kann die Anpreßkraft des Wischblatts auf die Windschutzscheibe durch den Fahrtwind soweit reduziert werden, daß das Wischblatt von der Windschutzscheibe abhebt, auf einem Wasserfilm aufschwimmt oder daß die Wischlippe des Wischergummis umgeblasen wird. Dies führt dazu, daß das Wischblatt auf der Windschutzscheibe rattert und die Reinigungsqualität unzureichend ist.

Bekannt ist, auf der Fahrerseite eine Windschaufel in Abwärtswischrichtung vor dem Wischblatt zu befestigen, die den Fahrtwind über das Wischblatt leitet und dabei das Wischblatt auf die Fahrzeugscheibe drückt. Die Windschaufel sollte beim Hersteller und bei einer möglicherweise späteren Nachrüstung bzw. Austausch in einer Werkstatt oder von einem Kraftfahrzeugbenutzer selbst schnell und leicht montierbar und demontierbar sein, beispielsweise beim Wechsel eines Wischblatts. Auf die Windschaufel wirken, insbesondere bei hohen Geschwindigkeiten, große Kräfte, die beispielsweise durch Seitenwind aus unterschiedlichen Richtungen an der Windschaufel angreifen können. Um zu vermeiden, daß sich die Windschaufel löst, dadurch verloren geht oder Geräusche verursacht, muß diese nach der Montage in alle Richtungen sicher und möglichst spielfrei fixiert sein.

Aus der EP 0 599 637 B1 ist ein Wischblatt mit einer Windschaufel bekannt, die mit zwei Klammerelementen an einem Hauptbügel des Wischblatts befestigt ist. Die Windschaufel ist auf der dem Fahrtwind zugewandten Seite des Wischblatts angeordnet. Der Hauptbügel besitzt auf der der Windschutzscheibe abgewandten Seite Öffnungen, auf dessen Ränder die Klammerelemente jeweils aufliegen, mit einem Vorsprung in Richtung Windschutzscheibe durchgreifen und mit einer Lippe eine Kante der Öffnung hintergreifen. Zwischen der Lippe und dem Klammerelement entsteht dadurch ein Schlitz, in den die Kante der Öffnung ragt. Die Lippen weisen jeweils in Längsrichtung des Wischblatts nach außen, d.h. bei dem von der Fahrtwindrichtung betrachteten rechten Klammerelement nach rechts und bei dem linken Klammerelement nach links. Um die Windschaufel zu montieren, wird zuerst ein erstes Klammerelement in eine erste Öffnung eingeführt, anschließend muß die Windschaufel, beide Klammerelemente und die Lippe des zweiten Klammerelements soweit verformt werden, daß das zweite Klammerelement in die zweite Öffnung eingeführt werden und mit der Lippe die Kante der Öffnung hintergreifen kann. Die Windschaufel, beide Klammerelemente und die Lippen müssen dabei flexibel ausgeführt sein. Für eine leichte Montage sollte die Spannkraft der Bauteile möglichst gering und für eine sichere Befestigung möglichst hoch sein. Ferner muß eine bestimmte Verformungskraft aufgebracht werden, daß das Klammerelement einführbar ist und gleichzeitig muß zum Einführen das Klammerelement genau positioniert werden.

In einer zweiten Ausgestaltung wird für nicht derart flexible Windschaufeln vorgeschlagen, jedes Klammerelement mit federnden, nach außen gerichteten Vorsprüngen zu versehen. Bei starren Windschaufeln, für welche die Klammerelemente vorgeschlagen werden, müssen bei der Montage die Klammerelemente möglichst gleichzeitig durch die Öffnungen geschoben werden, die Vorsprünge federn nach innen und rasten im eingeschobenen Zustand jeweils unter der Kante der Öffnung ein.

### Vorteile der Erfindung

Bei der Erfindung werden unterschiedliche Befestigungselemente kombiniert, und zwar zumindest ein Befestigungselement, das eine Rastverbindung herstellt, und zumindest ein zweites Befestigungselement, das eine Steckverbindung herstellt. Bei der Montage wird in einem ersten Montageschritt das zweite Befestigungselement, das die Steckverbindung herstellt, bei ausgelenktem Zustand der Windschaufel mit einem Vorsprung durch eine Befestigungsöffnung im Tragbügelsystem geführt, wodurch die Windschaufel bereits bei der Montage mit diesem Befestigungselement entsprechend positioniert und in einzelne Richtungen fixiert ist, vorzugsweise indem der Vorsprung hinter eine Kante der Öffnung geführt wird. In einem zweiten Montageschritt wird das Befestigungselement der Windschaufel, das eine Rastverbindung herstellt, zum Tragbügelsystem geführt und eingerastet. Die Windschaufel wird in den restlichen Richtungen, in denen sie bis dahin noch verschiebbar war, fixiert und insgesamt befestigt. Die Windschaufel kann nacheinander, zuerst mit dem einen und anschließend mit dem anderen Befestigungselement befestigt werden, wodurch der Montierende jeweils nur auf ein Befestigungselement achten, d.h. dies in die richtige Position bringen muß. Die Montage wird erleichtert und kann schneller durchgeführt werden. Die Windschaufel wird beim zweiten Montageschritt in seine endgültige Position geführt, wodurch neben der Rastverbindung mit weiteren Befestigungselementen, die mit dem ersten Befestigungselement automatisch richtig positioniert werden, einfach weitere Steckverbindungen und Rastverbindungen geschaffen werden können. Ferner trägt zu einer erleichterten Montage bei, daß die Windschaufel nicht verformt und dadurch vom Montierenden keine entsprechende Kraft aufgebracht werden muß. Zudem können starre und weniger flexible Windschaufeln verwendet werden. Dies schließt jedoch grundsätzlich nicht aus, daß die Windschaufel und das Tragbügelsystem bei der Montage miteinander verspannt werden können, um neben einem Formschluß einen Kraftschluß zu erreichen. In diesem Fall ist die aufzubringende Spannkraft nur nach dem in der Regel unterstützenden Kraftschluß zu bestimmen und ist nicht die Voraussetzung für den Formschluß. Ferner kann die Überdeckung des Vorsprungs des Befestigungselements mit einem Teil des Tragbügelsystems allein auf die auftretenden Belastungen abgestimmt werden, ohne daß dadurch die weitere Montage beeinträchtigt wird, wodurch die Steckverbindung und damit die Befestigung besonders sicher ausgeführt werden kann.

Das Tragbügelsystem weist in der Regel einen Hauptbügel mit daran angelenktem Zwischenbügel auf, mit dessen Enden Krallenbügel gelenkig verbunden sind, die mit Haltekrallen einen Wischergummi halten. Eine geläufige Ausführungsform des Hauptbügels weist auf der der Windschutzscheibe abgewandten Seite Öffnungen auf. Vorzugsweise werden diese Öffnungen zur Befestigung der Windschaufel genutzt. In einer Ausgestaltung der Erfindung sind die Befestigungselemente in Längsrichtung nacheinander angeordnet und übergreifen den Hauptbügel jeweils an der Stelle einer Öffnung. Der Vorsprung des zweiten Befestigungselements weist vorzugsweise in Richtung des ersten Befestigungselements oder in dessen entgegengesetzte Richtung. Die Windschaufel kann dadurch bei der Montage weit ausgelenkt und die Steckverbindung leicht hergestellt werden.

Ferner wird vorgeschlagen, daß das zweite Befestigungselement nach dem ersten Montageschritt mit einem Absatz an einer Kante der Öffnung anliegt. Die Windschaufel kann dadurch beim zweiten Montageschritt um die Kante gedreht und geführt mit geringem Aufwand in seine endgültige Lage gebracht werden. Mit einem Teil des zweiten Befestigungselements, das am Umfang der Öffnung und/oder am Rand der Öffnung anliegt, kann zudem vorteilhaft ein Formschluß für die Montage und insbesondere für die endgültige Befestigung in verschiedene Richtungen erreicht werden. Die Befestigungselemente können als separate Bauteile oder vorzugsweise einstückig mit der Windschaufel ausgeführt werden, wodurch zusätzliche Bauteile und Montagevorgänge eingespart werden können.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen vergrößerten Ausschnitt eines Wischblatts mit einer Windschaufel von der Seite,
- Fig. 2: ein Wischblatt mit einer Windschaufel von oben,
- Fig. 3: einen vergrößerten Ausschnitt III aus Fig. 2 ohne Windschaufel,
- Fig. 4: einen Hauptbügel eines Wischblatts und eine Windschaufel nach einem ersten Montageschritt,
- Fig. 5: einen Schnitt entlang der Linie V-V in Fig. 3 nach dem ersten Montageschritt wie in Fig. 4,
- Fig. 6: einen Hauptbügel mit einer Windschaufel im montieren Zustand,
- Fig. 7: einen Schnitt entlang der Linie V-V in Fig. 3 im montierten Zustand,
- Fig. 8: einen Schnitt entlang der Linie VIII-VIII in Fig. 6 und
- Fig. 9: einen Schnitt entlang der Linie IX-IX in Fig. 6

### Beschreibung des Ausführungsbeispiels

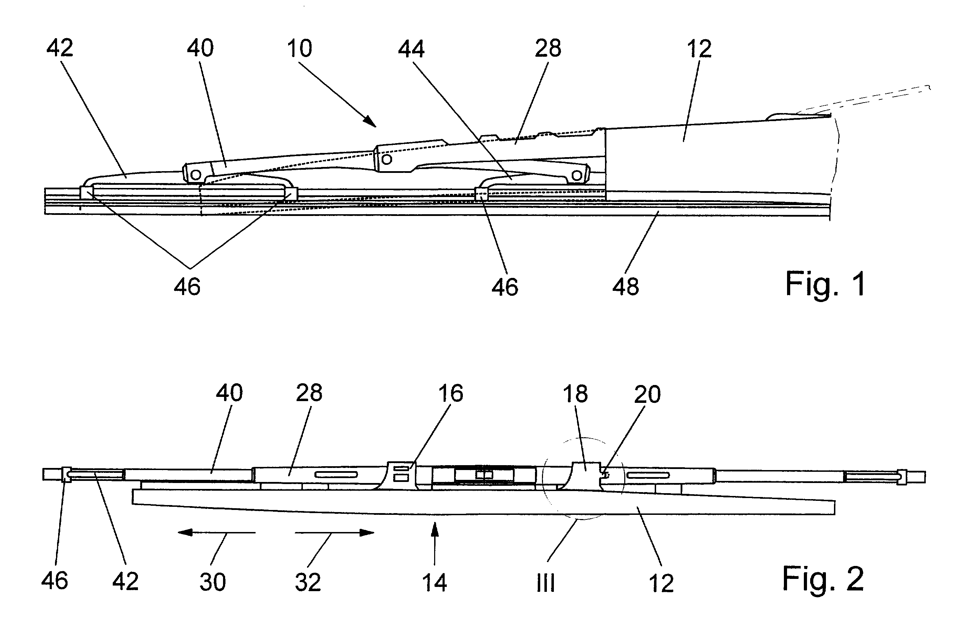

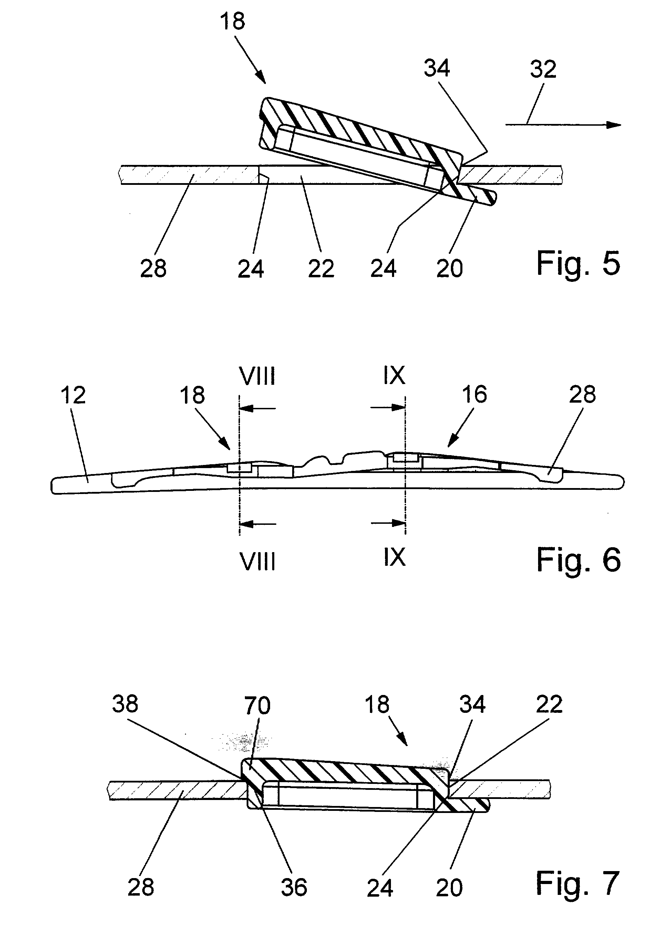

In Fig. 1 ist ein Ausschnitt eines Wischblatts zur Reinigung von Windschutzscheiben für Kraftfahrzeuge mit einem Tragbügelsystem 10 dargestellt. Das Tragbügelsystem 10 weist einen Hauptbügel 28 mit daran angelenkten Zwischenbügel 40 auf, mit dessen Enden Krallenbügel 42, 44 gelenkig verbunden sind. In Haltekrallen 46 der Krallenbügel 42, 44 ist ein Wischergummi 48 gehalten. Auf der dem Fahrtwind 14 des Kraftfahrzeugs zugewandten Seite des Tragbügelsystems 10 ist eine Windschaufel 12 mit zwei Befestigungselementen 16, 18 am Tragbügelsystem 10 befestigt (Fig. 2 und 6). Die Befestigungselemente 16, 18 sind einstückig mit der Windschaufel 12 ausgeführt, sind in Längsrichtung 30, 32 des Wischblatts nacheinander angeordnet (Fig. 2) und greifen in Öffnungen 22, 26 des Hauptbügels 28 auf der der Windschutzscheibe abgewandten Seite (Fig. 7 u. 9). Die Windschaufel 12 ist erfindungsgemäß über das Befestigungselement 16 mit einer Rastverbindung in der Öffnung 26 am Hauptbügel 28 und über das Befestigungselement 18 mit einer Steckverbindung in der Öffnung 22 am Hauptbügel 28 befestigt.

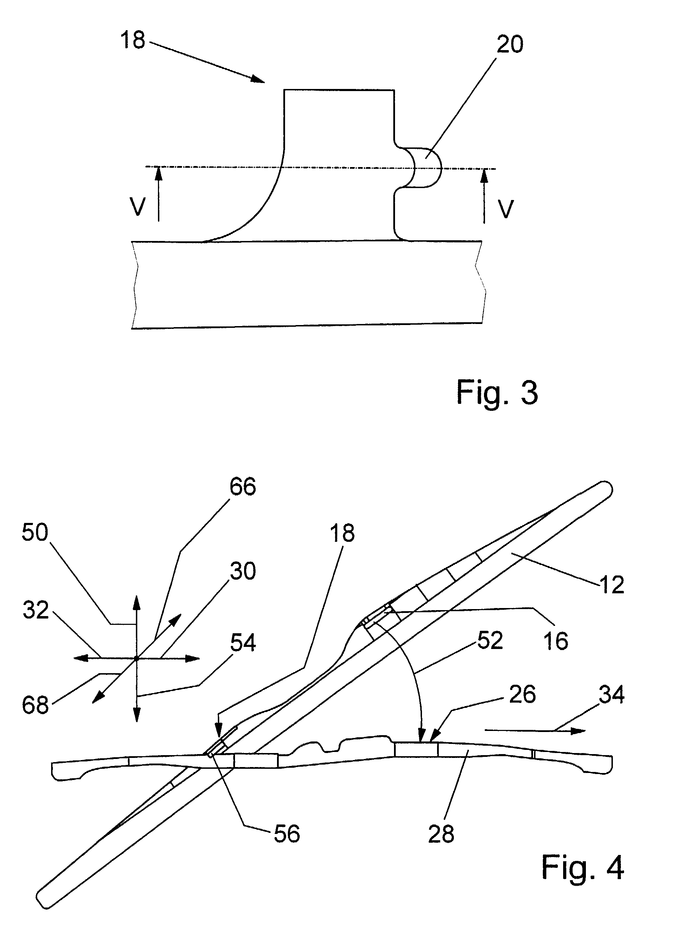

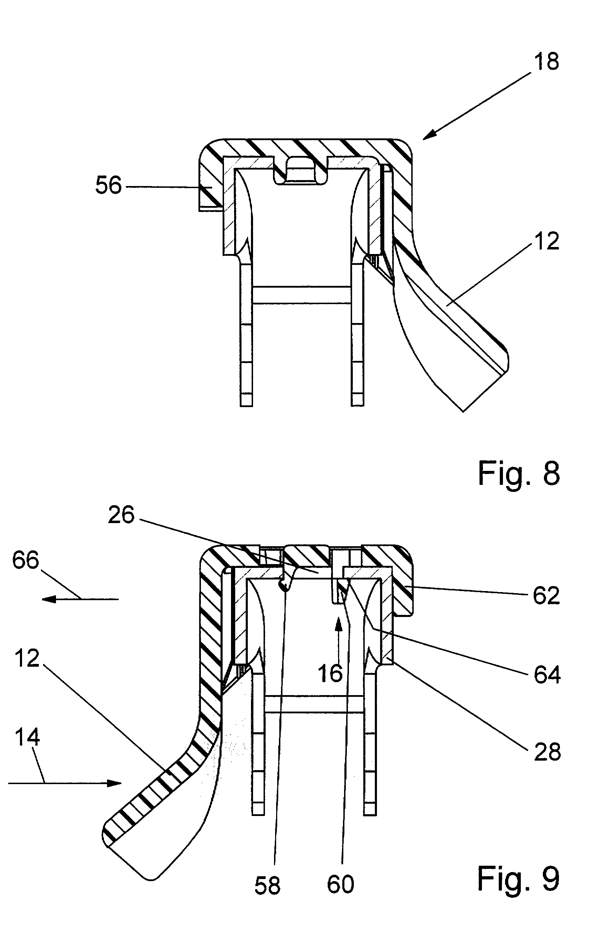

Das Befestigungselement 18 wird in einem ersten Montageschritt in ausgelenktem Zustand der Windschaufel 12 (Fig. 4) mit einem Vorsprung 20 (Fig. 3 und 5) durch die Öffnung 22 hinter eine Kante 24 geführt, bis ein Absatz 34 an der Kante 24 anliegt. Dabei liegt das Befestigungselement 18 mit einer Seite auf dem Hauptbügel 28 auf und hintergreift diesen mit einer Lasche 56 (Fig. 4 und 8). Nach dem ersten Montageschritt ist die Windschaufel 12 in Längsrichtung 32 durch den Absatz 34 fixiert. Senkrecht zur Windschutzscheibe, in Richtung 50 und 54 sowie in Fahrtrichtung 66 und in Richtung 68 des Fahrtwinds 14 ist die Windschaufel 12 durch den Vorsprung 20 und die Lasche 56 fixiert (Fig. 4). In einem zweiten Montageschritt kann dadurch die Windschaufel 12 mit dem Befestigungselement 16 um die Kante 24 der Öffnung 22 geführt in einer Drehbewegung 52 zur Öffnung 26 im Hauptbügel 28 gebracht und eingerastet werden. Fig. 4 zeigt die Windschaufel 12 vor der Drehbewegung 52 und Fig. 6 nach der Drehbewegung 52. Die Windschaufel 12 bleibt mit dem Befestigungselement 18 während der Drehbewegung 52 des zweiten Montageschritts in der Öffnung 22 und das Befestigungselement 16 wird geführt in die Öffnung 26 gebracht, was die Montage erleichtert.

Das Befestigungselement 16 weist zwei elastische Hakenteile 58, 60 auf, die beim Einführen in die Öffnung 26 nach innen einfedern und anschließend am Rand 64 der Öffnung 26 einrasten (Fig. 9). Ferner weist das Befestigungselement 16 eine Lasche 62 auf, die den Hauptbügel 28 hintergreift und die Windschaufel 12 in Fahrtrichtung 66 fixiert. Am Ende der Drehbewegung 52 schiebt sich ein Teil 36 des Befestigungsteils 18 in die Öffnung 22 bis das Befestigungsteil 18 mit einem Absatz 70 auf einem Rand 38 der Öffnung 22 auflieft(Fig. 7). Das Teil 36 liegt an der Kante 24 der Öffnung 22 an und stellt gemeinsam mit dem Absatz 34 einen Formschluß in einer Ebene her, die durch die Richtungen 30 und 66 aufgespannt ist und in etwa parallel zur Windschutzscheibe verläuft.

Durch die Befestigungselemente 16, 18 wird ein sicherer Halt der Windschaufel 12 in sämtliche Richtungen 30, 32, 50, 54, 66, 68 erreicht, mit einer einfachen und schnell durchführbaren Montage, ohne daß die Windschaufel 12 verformt werden muß.

### Bezugszeichen

- 10: Tragbügelsystem
- 12: Windschaufel
- 14: Fahrtwind
- 16: Befestigungselement
- 18: Befestigungselement
- 20: Vorsprung
- 22: Öffnung
- 24: Kante
- 26: Öffnung
- 28: Hauptbügel
- 30: Längsrichtung
- 32: Längsrichtung
- 34: Absatz
- 36: Teil
- 38: Rand
- 40: Zwischenbügel
- 42: Krallenbügel
- 44: Krallenbügel
- 46: Haltekralle
- 48: Wischergummi
- 50: Richtung
- 52: Drehbewegung
- 54: Richtung
- 56: Lasche
- 58: Hakenteil
- 60: Hakenteil
- 62: Lasche
- 64: Rand
- 66: Fahrtrichtung
- 68: Richtung
- 70: Absatz

## Patentansprüche

1. Wischblatt mit einem Tragbügelsystem (10) zur Reinigung von Windschutzscheiben für Kraftfahrzeuge mit einer Windschaufel (12), die entlang der dem Fahrtwind (14) des Kraftfahrzeugs zugewandten Seite des Tragbügelsystems (10) angeordnet und mit zumindest zwei Befestigungselementen (16, 18) am Tragbügelsystem (10) befestigt ist, wobei ein erstes Befestigungselement (16) eine Rastverbindung herstellt, dadurch gekennzeichnet, daß das zweite Befestigungselement (18) eine Steckverbindung herstellt, indem es bei der Montage in seitlich ausgelenktem Zustand der Windschaufel (12) mit einem Vorsprung (20) durch eine Öffnung (22) des Tragbügelsystems geführt ist, bevor die Windschaufel (12) mit dem ersten Befestigungselement (16) befestigt ist und die Windschaufel (12) bei und nach der Montage in einzelne Richtungen (30, 32, 50, 54, 66, 68) fixiert.

2. Wischblatt nach Anspruch 1, dadurch gekennzeichnet, daß der Vorsprung (20) hinter eine Kante (24) der Öffnung (22) im Tragbügelsystem (10) geführt ist.

3. Wischblatt nach Anspruch 1 oder 2, dadurch gekennzeichnet, daß das erste Befestigungselement (16) in einer Öffnung (26) eingerastet ist.

4. Wischblatt nach Anspruch 3, dadurch gekennzeichnet, daß ein Hauptbügel (28) des Tragbügelsystems (10) auf der der Windschutzscheibe abgewandten Seite die Öffnungen (22, 26) aufweist, daß die Befestigungselemente (16, 18) in Längsrichtung (30, 32) des Hauptbügels (28) nacheinander angeordnet sind und den Hauptbügel (28) jeweils an der Stelle der Öffnung (22, 26) übergreifen, wobei der Vorsprung (20) des zweiten Befestigungselements (18) in Richtung (32) des ersten Befestigungselements (18) oder in dessen entgegengesetzte Richtung (30) weist.

5. Wischblatt nach Anspruch 4, dadurch gekennzeichnet, daß das zweite Befestigungselement (18) den Hauptbügel (28) bei der Montage mit einer Lasche (56) hintergreift.

6. Wischblatt nach einem der Ansprüche 2 bis 5, dadurch gekennzeichnet, daß das zweite Befestigungselement (18) in Einführungsrichtung (32) des Vorsprungs (20) mit einem Absatz (34) an der Kante (24) der Öffnung (22) anliegt.

7. Wischblatt nach einem der Ansprüche 2 bis 6, dadurch gekennzeichnet, daß das zweite Befestigungselement (18) mit einem Teil (36) auf der dem Vorsprung (20) gegenüberliegenden Seite an der Kante (24) der Öffnung (22) anliegt.

8. Wischblatt nach einem der vorhergehenden Ansprüche, dadurch gekennzeichnet, daß die Windschaufel (12) und die Befestigungselemente (16, 18) einstückig ausgeführt sind.
